(19) Europäisches Patentamt
European Patent Office
Office européen des brevets

(11) EP 3 186 317 B1

(12) # EUROPEAN PATENT SPECIFICATION

(45) Date of publication and mention of the grant of the patent:
**31.07.2019 Bulletin 2019/31**

(21) Application number: **15754241.6**

(22) Date of filing: **27.08.2015**

(51) Int Cl.:
***C09D 11/00*** (2014.01) ***C09D 11/322*** (2014.01)
***C09D 11/54*** (2014.01) ***C09D 11/38*** (2014.01)
***C09D 11/40*** (2014.01)

(86) International application number:
**PCT/EP2015/069619**

(87) International publication number:
**WO 2016/030452 (03.03.2016 Gazette 2016/09)**

(54) **AQUEOUS REACTION LIQUID, INK SET COMPRISING SUCH REACTION LIQUID AND METHOD OF PRINTING USING SUCH REACTION LIQUID**

WÄSSRIGE REAKTIONSFLÜSSIGKEIT, TINTENSATZ MIT EINER SOLCHEN REAKTIONSFLÜSSIGKEIT UND DRUCKVERFAHREN MIT EINER SOLCHEN REAKTIONSFLÜSSIGKEIT

LIQUIDE DE RÉACTION AQUEUX, ENSEMBLE D'ENCRES COMPRENANT UN TEL LIQUIDE DE RÉACTION ET PROCÉDÉ D'IMPRESSION UTILISANT LEDIT LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2014 EP 14182857**

(43) Date of publication of application:
**05.07.2017 Bulletin 2017/27**

(73) Proprietor: **OCE-TECHNOLOGIES B.V.**
**5914 CA Venlo (NL)**

(72) Inventors:
- **WILLEMS, Guido G.**
  **5914 CA Venlo (NL)**
- **KUIJPERS, Heidy A.J.M.**
  **5914 CA Venlo (NL)**

(74) Representative: **OCE IP Department**
**St. Urbanusweg 43**
**5914 CA Venlo (NL)**

(56) References cited:
**EP-A1- 0 959 112** **EP-A1- 2 489 707**
**EP-A2- 0 761 783** **WO-A1-2011/099977**
**JP-A- 2014 097 632** **US-A1- 2012 229 558**
**US-A1- 2014 055 520**

- **MISHELEVICH A ET AL: "Solubilities of magnesium-l-ascorbate, calcium-l-ascorbate, magnesium-l-glutamate, magnesium-d-gluconate, calcium-d-gluconate, calcium-d-heptagluconate, l-aspartic acid, and 3-nitrobenzoic acid in water", JOURNAL OF CHEMICAL THERMODYNAMICS, ACADEMIC PRESS, LONDON, GB, vol. 40, no. 5, 1 May 2008 (2008-05-01), pages 897-900, XP022618256, ISSN: 0021-9614, DOI: 10.1016/J.JCT.2007.12.006 [retrieved on 2007-12-25] cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 186 317 B1

**Description**

FIELD OF THE INVENTION

The present invention relates to a reaction liquid suitable to be used in ink-jet printing, in particular a reaction liquid that is suitable to be applied onto a recording substrate by means of an ink-jet imaging device.

BACKGROUND ART

In the field of ink jet printing, reaction liquids are used for improving print quality. The reaction liquid comprises a component that reacts with a component in the ink, e.g. the colloidal stability of dispersed pigment particles (present in the ink) is imparted by a metal salt (present in the reaction liquid). Therefore, upon contact between the ink composition and the reaction liquid, the dispersed pigment particles destabilize, agglomerate and are pinned to the recording substrate. Therefore, (inter) color bleeding and coalescence on machine coated (MC) papers may be prevented, which is an improvement of the print quality. The OD is increased and show-through is decreased on plain papers.

Reaction liquids are known from the prior art and usually comprise either a strong acidic compound or a (poly)valent metal salt, having the function of a fixer and/or crashing agent.

Reaction liquids, also termed reaction solutions, primer liquids, (pre-)treatment liquids or compositions, processing liquids or ink-receiving solutions, comprising polyvalent metal salts are known from the prior art, in particular from US 6,419,352; US 6,786,588; US 8,523,342; US 5,591,018; US 2011/0303113; US 2012/0098883; US 2012/0314000; and WO 2014/051547.

Published US Patent Application 2012/0019588 discloses fixer fluids, for ink-jet printing comprising a metal carboxylate salt as a fixer agent. In particular calcium acetate, calcium propionate, calcium butyrate, calcium bromide, calcium carbonate, calcium chloride, calcium citrate, calcium cyanamide, calcium phosphate, calcium lactate, calcium nitrate, calcium oxalate and calcium sulfate are disclosed as fixer agents.

Published US Patent Application 2014/0055520 discloses an ink-receiving solution comprising at least one metal salt. In particular calcium chloride

Mishelevich A et al. disclose the solubilities of magnesium-L-ascorbate, calcium-L-ascorbate, magnesium-L-glutamate, magnesium-D-gluconate, calcium-D-gluconate, calcium-D-heptagluconate, L-aspartic acid, and 3-nitrobenzoic acid in water (Journal of Chemical Thermodynamics, Academic press, London, GB, vol. 40, no. 5, 1 May 2008, pages 897-900).

JP2014097632 discloses a treatment liquid for treating a recording medium which includes at least a water-soluble organic solvent, an amphiphilic substance, an organic acid or organic acid salt and/or cation polymer, a hydrophobic crosslinking agent, and water. Bisethoxy diglycol succinate, lysine sodium dilauroyl glutamate can are cited as amphiphilic substances.

EP2489707A1 discloses an ink composition comprising cyan or magenta pigment particles and (substantially) water-insoluble resin particles and/or water-insoluble wax particles. An ink set comprising such an ink and a treatment liquid including an aggregating component that forms and aggregate when contacted with the ink composition is also disclosed.

EP0761783A2 discloses an inkjet ink and an inkjet recording method wherein a reaction solution containing a reactant, capable of breaking the state of dispersion and/or dissolution of a pigment in the ink composition when brought into contact with the ink composition.

WO2011/099977A1 discloses a fixer fluid composition for inkjet printing comprising a metal carboxylate salt as fixer agent.

EP0959112A1 discloses a reaction solution that comprises at least a polyvalent metal salt, ammonia, and benzotriazole or a benzotriazole derivative.

US2012/229558A1 discloses a treatment solution for ink-jet recording, comprising: water; and basic amino acid or a salt thereof which is contained in the treatment solution in an amount of not less than 1% by weight. Disclosed examples of basic amino acids are lysine, arginine, histidine and ornithine.

The reaction liquids comprising a (poly)valent metal salt usually comprise a conjugate base of acids or a halide as an anion.

It is a disadvantage of the known reaction liquids that they comprise components that are corrosive to commonly used ink-jet imaging devices, e.g. ink-jet print heads, such that these reaction liquids are not suitable to be applied by ink-jet printing.

It is another disadvantage of some of the known reaction liquids that the salts comprised therein constitute significant Health, Safety and Environmental (HSE) risks, e.g. toxic.

It is therefore an object of the present invention to provide a HSE-friendly reaction liquid suitable to be applied by ink-jet printing and not corrosive to commonly used ink-jet imaging devices.

## SUMMARY OF THE INVENTION

This object is at least partly attained by an ink set comprising an aqueous reaction liquid comprising a salt of the conjugate base of pidolic acid wherein the salt comprises a polyvalent metal ion selected from the group consisting of : $Ca^{2+}$, $Mg^{2+}$, $Sr^{2+}$, $Zn^{2+}$, $Cu^{2+}$, $Ni^{2+}$, $Fe^{3+}$, $Cr^{3+}$ and $Al^{3+}$ as a cation, the ink set comprising an ink composition comprising dispersed particles that upon contact with the salt comprised in the reaction liquid agglomerate.

Inventors have found that such reaction liquids are not corrosive to commonly used ink-jet imaging devices.

The salt comprises a metal ion as a cation, preferably a polyvalent metal ion, more preferably selected from the group consisting of : $Ca^{2+}$, $Mg^{2+}$, $Sr^{2+}$, $Zn^{2+}$, $Cu^{2+}$, $Ni^{2+}$, $Fe^{3+}$, $Cr^{3+}$ and $Al^{3+}$. $Mg^{2+}$ and $Ca^{2+}$ are most preferred for HSE reasons.

Pidolic acid is also termed pyroglutamic acid and is a lactam that is formed when glutamine or glutamic cyclizes.

In an embodiment, the salt comprises Mg-pidolate or Ca-pidolate. These are HSE-friendly, non-corrosive and non-smelling. Mg-pidolate and Ca-pidolate have the additional advantage of being hygroscopic which enables reducing the amounts of cosolvents in the reaction liquid, without increasing the risk of nozzle clogging due to salt precipitation. Also media deformation may be prevented or reduced.

In an embodiment, the dispersed particles comprised in the ink composition comprise pigment particles.

In an embodiment, the dispersed particles comprised in the ink composition comprise latex particles.

In another aspect, the present invention pertains to a method of printing comprising the steps of :

- providing an ink set according to present invention; and a print substrate ;
- applying the reaction liquid comprised in the ink set to a surface of the print substrate ;
- applying the ink composition comprised in the ink set to a surface of the print substrate.

In an embodiment, the reaction liquid is first applied to the surface of the print substrate and subsequently the ink composition is applied to the surface of the print substrate.

In an embodiment, the reaction liquid is applied by ink jet.

In an embodiment, the reaction liquid is applied to the surface of the print substrate in a pattern.

In an embodiment, the reaction liquid is applied to the surface of the print substrate in accordance with an image to be formed by subsequently printing the ink composition.

In an embodiment, the ink composition is imagewise applied by ink jet.

The present invention will become more fully understood from the detailed description given herein below and the examples which are given by way of illustration only and are not limitative of the invention.

## DETAILED DESCRIPTION

### reaction liquid

Reaction liquids according to the present invention comprise a metal salt of an organic acid selected from formic acid and organic acids comprising at least one stereogenic center and having a molecular weight of below 200 g/mol and water. Reaction liquids may comprise additives such as cosolvents, pH-regulators and surfactants. Reaction liquids according to the present invention can be suitable used on plain papers and machine coated (MC) papers, which are well known in the art.

<u>Metal salts</u>

Metal salts that can be suitably used in reaction liquids according to the present invention comprise monovalent metal ions such as $Li^+$, $Na^+$, $K^+$, $Hg^+$, $Cu^+$ and $Ag^+$. However, it is preferred that thin layers of the reaction liquid can be applied to a print substrate, in order to prevent deformation of the print substrate (in particular paper-like substrates). Therefore, in order to provide an effective reaction liquid in thin layers, a salt providing a relatively high ionic strength is preferred.

In the context of the present invention, ionic strength is defined in accordance with equation 1:

$$I = \frac{1}{2} \times \sum_{i=1}^{n} \left(c_i \times z_i^2\right)$$

equation 1

wherein:

I is the ionic strength in M (i.e. mol/l);
$c_i$ is the concentration of ion i;
$z_i$ is the valence of ion i;

For example, the ionic strength of a 0.5 mol/l $Na_2SO_4$ solution is:

$$0.5 * (2*0.5*(1)^2+1*0.5*(-2)^2) = 1.5 \text{ M}$$

Another criterion to be observed is that the solubility of the selected salt is high enough to be able to prepare an effective reaction solution. For these reasons, polyvalent metal ions are preferred, such as : $Ca^{2+}$, $Mg^{2+}$, $Sr^{2+}$, $Zn^{2+}$, $Cu^{2+}$, $Ni^{2+}$, $Fe^{3+}$, $Cr^{3+}$ and $Al^{3+}$. Of these, $Mg^{2+}$ and $Ca^{2+}$ are most preferred for HSE reasons.

The use of acid-like anions in accordance with the present invention (i.e. a conjugate base of an organic acid, wherein the organic acid is selected from formic acid and organic acids comprising at least one stereogenic center and having a molecular weight of below 200 g/mol), the selected cation can be used at a pH of above 7, without precipitation. The soluble salts of such acids (in particular the amino acids) are suitable to be used for ink-jet application of the reaction liquid. Due to their relatively high solubility, reaction solutions comprising high salt contents can be obtained. Therefore, thin layers can be applied to obtain an effective salt content on the recording substrate (0.2-1.5 $g/m^2$ reaction liquid). As described above, application of thin layers of reaction solution contributes to the reducing or preventing deformation of the print substrate, due to the fact that less liquid needs to be applied to the print substrate. Examples of suitable anions in the context of the present invention are:, glutamate (glutamic acid), pidolate (pidolic acid), taurate (taurine), aspartate (aspartic acid), asparaginate (asparagine), arginate (arginine).

In the context of the present invention, the most preferred polyvalent metal salts are magnesium glutamate, calcium glutamate magnesium pidolate and calcium pidolate. The use of these salts in reaction liquids provides the most effective, HSE-friendly, non-corrosive, non-smelling reaction liquid.

In general, the reaction liquids according to the present invention comprise between 10 wt% and 60 wt%, preferably between 15 w% and 50 wt%, more preferably between 20 wt% and 40 wt% of the multi-valent metal salt, with reference to the total composition.

The amount of salt is however limited to the maximum solubility of the salt. The saturation degree (actual concentration / maximum solubility *100%) of the salt in the reaction liquid is in general between 10% and 100%, preferably between 15% and 95%, more preferably between 20% and 80%.

Cosolvents

In order to meet jettability requirements, cosolvents may be added to the reaction liquid. Cosolvents may have multiple functions, e.g. adapting the rheological behavior of the reaction liquid and/or preventing drying of the reaction liquid in the imaging device or on the nozzle surface of the imaging device, which drying may lead to precipitation of the metal salt in the imaging device or on the nozzle plate. Cosolvents may also be used to improve penetration of the main solvent (water) into the print substrate, such cosolvents are also termed penetrants. The type of cosolvents used is not limited to any kind, as long as the effect of the present invention is preserved. Cosolvents similarly used in (aqueous) ink compositions may be suitably used in reaction liquids according to the present invention. Examples of suitable cosolvents are water-soluble organic solvents such as polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Examples of water-soluble organic solvents include: glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, petaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol monopropyl ether, diethylene glycol monobutyl ether, tripropylene glycol

monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol.

In an embodiment, a mixture of the water-soluble organic solvents may be comprised in a reaction liquid according to the present invention. The individual organic solvents preferably being present in an amount of 1 weight% to 40 weight%, more preferably in an amount of 3 weight% to 30 weight%, even more preferably in an amount of 5 weight% to 20 weight%, relative to the total ink composition.

pH-reaulators

pH-regulators may be added to the reaction liquid to optimize the pH of the reaction liquid in order to meet the pH requirements specified for the used print head. In general, the pH specification of the print head is in the alkaline region (i.e. pH > 7). Therefore, alkaline pH-regulators are preferred. Examples of suitable pH-regulators are: ammonia, (secondary and tertiary) amines, amino alcohols, in particular N-alkyl-dialkanolamines. Specific examples of suitable amino alcohols are: triethanolamine, N-metyldiethanolamine, N-ethyldiethanolamine, N-n-butyl-monoethanolamine and N-n-butyl-diethanolamine.

Usually pH-regulators are present in a small amount in the reaction liquid, in particular less than 1 wt% with respect to the total reaction liquid composition. However, pH-regulators can be suitably applied in any amount until the desired pH has been reached and as long as the effect of the present invention is preserved

Surfactants

Surfactants may be added to the reaction liquid to improve the spreading behaviour of the reaction liquid on the print substrate.

Examples of the surfactant include nonionic surfactants, cationic surfactants, anionic surfactants, amphoteric surfactants, in particular betaine surfactants, silicone surfactants, and fluorochemical surfactants. Particularly, at least one selected from acetylene surfactants, silicone surfactants and fluorochemical surfactants.

Examples of a cationic surfactant include: aliphatic amine salts, aliphatic quarternary ammonium salts, benzalkonium salts, benzethonium chloride, pyridinium salts, imidazolinium salts.

Examples of an anionic surfactant include: polyoxyethylene alkylether acetic acid salts, dodecylbenzene sulfonic acid salts, lauric acid salts, and salts of polyoxyethylene alkylether sulfate, an aliphatic acid soap, an N-acyl-N-methyl glycin salt, an N-acyl-N-methyl-β-alanine salt, an N-acylglutamate, an acylated peptide, an alkylsulfonic acid salt, an alkylbezenesulfonic acid salt, an alkylnaphthalenesulfonic acid salt, a dialkylsulfo succinate (e.g. sodium dioctyl sulfosuccinate (DSS); alternative names: docusate sodium, Aerosol OT and AOT), alkylsulfo acetate, α-olefin sulfonate, N-acylmethyl taurine, a sulfonated oil, a higher alcohol sulfate salt, a secondary higher alcohol sulfate salt, an alkyl ether sulfate, a secondary higher alcohol ethoxysulfate, a polyoxyethylene alkylphenyl ether sulfate, a monoglysulfate, an aliphatic acid alkylolamido sulfate salt, an alkyl ether phosphate salt and an alkyl phosphate salt.

Examples of an amphoteric surfactant include: a carboxybetaine type, a sulfobetaine type, an aminocarboxylate salt and an imidazolium betaine.

Examples of a nonionic surfactant include: polyoxyethylene alkylether, polyoxypropylene polyoxyethylene alkylether, a polyoxyethylene secondary alcohol ether, a polyoxyethylene alkylphenyl ether, a polyoxyethylene sterol ether, a polyoxyethylenelanolin derivative polyoxyethylene polyoxypropylene alkyl ether, polyoxyethylene alkylester, a polyoxyethyleneglycerine aliphatic acid ester, a polyoxyethylene castor oil, a hydrogenated castor oil, a polyoxyethylene sorbitol aliphatic acid ester, a polyethylene glycols aliphatic acid ester, an aliphatic acid monoglyceride, a polyglycerine aliphatic acid ester, a sorbitan aliphatic acid ester, polyoxyethylene sorbitan aliphatic ester, a propylene glycol aliphatic acid ester, a cane sugar aliphatic acid ester, an aliphatic acid alkanol amide, polyoxyethylene alkylamide, a polyoxyethylene aliphatic acid amide, a polyoxyethylene alkylamine, an alkylamine oxide, an alcoxylated alcohol, an acetyleneglycol, an ethoxylated acetylene glycol, acetylene alcohol.

As the fluorochemical surfactant, a surfactant having 2 to 16 fluorine-substituted carbon atoms is preferred, and a surfactant having 4 to 16 fluorine-substituted carbon atoms is more preferred. When the number of fluorine-substituted carbon atoms is less than 2, the effect peculiar to a fluorochemical surfactant may not be obtained. When it is more than 16, degradation in storage stability etc. may arise.

Examples of the fluorochemical surfactants include nonionic fluorochemical surfactants, anionic fluorochemical surfactants, and amphoteric fluorochemical surfactants. Examples of the nonionic fluorochemical surfactants include perfluoroalkyl phosphoric acid ester compounds, perfluoroalkyl ethylene oxide adducts, and polyoxyalkylene ether polymer compounds having perfluoroalkyl ether groups as side chains. Among these, polyoxyalkylene ether polymer compounds

having perfluoroalkyl ether groups as side chains are preferable because they are low in foaming property.

As the fluorochemical surfactants, commercially available products may be used.

Examples of the commercially available products include SURFLON S-HI, S-112, S-113. S-121, S-131, S-132, S-141 and S-145 (all of which are produced by Asahi Glass Co., Ltd.), FLUORAD FC-93, FC-95, FC-98, FC-129, FC-135, FC-170C, FC-430 and FC-431 (all of which are produced by Sumitomo 3M Limited), MEGAFAC F-470, F-1405 and F-474 (all of which are produced by Dainippon Ink Chemical Industries Co., Ltd.), ZONYL TBS, FSP, FSA, FSN-100, FSN, FSO-100, FSO, FS-300 and UR (all of which are produced by E. I. du Pont de Nemours and Company), FT-110, FT-250, FT-251, FT-400S, FT- 150 and FT-400SW (all of which are produced by Neos Company Limited), and POLYFOX PF-136A, PF-156A, PF-151N, PF-154, and PF-159 (all of which are produced by OMNOVA Solutions Inc.). Among these, ZONYL FS-300 (produced by E. I. du Pont de Nemours and Company), FT-110, FT-250, FT-251, FT-400S, FT-150, FT-400SW (produced by Neos Company Limited), and POLYFOX PF-151N (produced by OMNOVA Solutions Inc.) are preferable in that they are excellent in print quality, particularly in color developing ability and in dye-leveling property.

The silicone surfactant is not particularly limited and may be suitably selected in accordance with the intended use.

Examples of the silicone surfactant include side-chain-modified polydimethylsiloxane, both-ends-modified polydimethylsiloxane, one-end-modified polydimethylsiloxane, and side-chain/both-ends-modified polydimethylsiloxane. Polyether-modified silicone surfactants having, as a modified group, a polyoxyethylene group or a polyoxyethylene polyoxypropylene group are particularly preferable because they exhibit excellent physical properties as water-based surfactants.

The silicone surfactant may be suitably synthesized or commercial products may be used. The commercial product is readily available from BYK Chemie GmbH, Shin-Etsu Chemical Co., Ltd., TORAY Dow Corning Silicone Co., Ltd., Nihon Emulsion Co., Ltd., Kyoeisha Chemical Co., Ltd., or the like.

The polyether-modified silicone surfactant is not particularly limited and may be suitably selected in accordance with the intended use. Examples thereof include a compound in which a polyalkylene oxide structure represented by Formula 1 is induced in Si portion side chain of dimethyl polysiloxane.

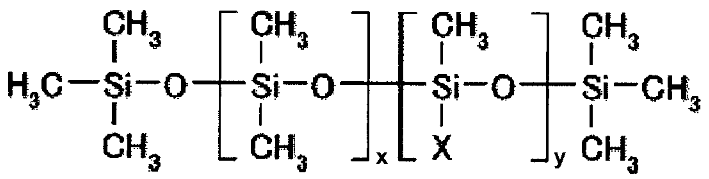

Formula 1

wherein X = $-R(C_2H_4O)_a(C_3H_6O)_bR'$

In Formula 1, x, y, a and b are each an integer; R represents an alkyl group, and R' represents an alkylene group.

As the polyether-modified silicone surfactant /polyalkylene oxide modified silicone, commercial products may be used.

Examples of the commercial products include KF-618, KF-642 and KF-643 (produced by Shin-Etsu Chemical Co., Ltd.); EMALEX-SS-5602 and SS- 1906EX (produced by Nihon Emulsion Co., Ltd.); FZ-2105, FZ-2118, FZ-2154, FZ-2161, FZ-2162, FZ-2163 and FZ-2164 (produced by TORAY Dow Corning Silicone Co., Ltd.); and BYK-33, BYK 331, BYK 341, BYK 348, BYK 349, BYK 3455, BYK-387 (produced by BYK Chemie GmbH); Tegowet 240, Tegowet 245, Tegowet 250, Tegowet 260 (produced by Evonik); Silwet L-77 (produced by Sabic), DBE 714 surfactant.

All surfactants mentioned in this section may be used solely, or they may be used in combination of the plural.

Ethoxylated acetylene glycols have a general structure as shown in Formula 2.

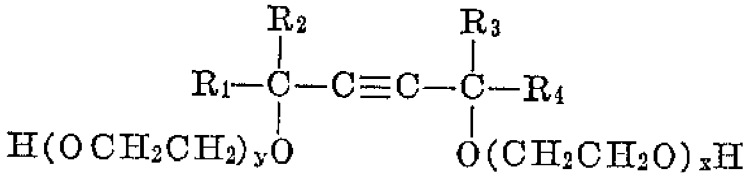

Formula 2

Wherein $R_1$ and $R_4$ are the same or different alkyl radicals having from 3-10, preferably from 3-6 carbon atoms, preferably $R_1$ and $R_4$ are the same and $R_2$ and $R_3$ are the same or different and selected from methyl and ethyl, preferably both $R_2$ and $R_3$ are methyl and x and y are both integers and have a sum in the range of between 1 and 60.

In an embodiment, an ethoxylated acetylene glycol according to Formula 2 is used as a surfactant alone or in combination with other surfactants in an ink composition according to the present invention, wherein x and y are independent of one another and each are in a range of between 0 and 25, preferably between 0 and 20, more preferably between 0 and 15, with the proviso that at least one of x and y is larger the 0.

Specific examples of ethoxylated acetylene glycols are ethoxylated 3-methyl-1-nonyn-3-ol, ethoxylated 7,10-dimethyl-8-hexadecyne-7,10-diol, ethoxylated 4,7-dimethyl-5-decyne-4,7-diol, ethoxylated 2,4,7,9-tetramethyl-5-decyne-4,7-diol, and ethoxylated 2,5,8,11-tetramethyl-6-dodecyne-5,8-diol. These can be used in combination with each other.

Surfactants may be used separately and in combination of the plural.

**Inks**

Any ink composition comprising dispersed particles that upon contact with the salt comprised in the reaction liquid agglomerate. The dispersed particles may be colorant particles, in particular pigment particles and/or latex particles. Examples of suitable inks are aqueous pigmented inks and latex inks, wherein the particles present in the ink (e.g. pigment particles and/or latex particles) are sensitive to reacting with the metal salts present in the primer compositions according to the present invention. Such ink compositions are for example disclosed in the published International Patent Application WO2013/131924, in particular in the Examples and the cited prior art.

<u>Colorant</u>

The colorant particles may be a pigment or a mixture of pigments, a dye or a mixture of dyes or a mixture comprising pigments and dyes, as long as the colorant is water-dispersed.

Examples of the pigment usable in the present invention include those commonly known without any limitation, and either a water-dispersed pigment or an oil-dispersed pigment is usable. For example, an organic pigment such as an insoluble pigment or a lake pigment, as well as an inorganic pigment such as carbon black, is preferably usable.

Examples of the insoluble pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination. As the inorganic pigments, it is possible to use carbon blacks produced by a known method such as a contact method, furnace method and thermal method, in addition to titanium oxide, iron oxide, calcium carbonate, barium sulfate, aluminum hydroxide, barium yellow, cadmium red and chrome yellow.

As the organic pigments, it is possible to use azo pigments (including azo lake, insoluble azo pigments, condensed pigments, chelate azo pigments), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black. Among these, particularly, pigments having high affinity with water are preferably used.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101(colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow

120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

The amount of the water-insoluble pigment contained in the inkjet ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, causing a degradation in ink ejection stability.

## Latex particles

The inkjet ink present in an ink set according to the present invention may contain a water-dispersed resin (latex resin) in view of the pigment fixability to recording media. As the water-dispersed resin, a water-dispersed resin excellent in film formability (image formability) and having high water repellency, high waterfastness, and high weatherability is useful in recording images having high waterfastness and high image density (high color developing ability).

Examples of the water-dispersed resin include synthetic resins and natural polymer compounds.

Examples of the synthetic resins include polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins.
Examples of the natural polymer compounds include celluloses, rosins, and natural rubbers.

In an embodiment, the water dispersed resin used in the present invention may be made of a resin having a water soluble functional group such as a carboxylic group or a sulfonic group.

In an embodiment, the ink composition according to the present invention comprises a resin having a carboxylic group which has a small dissociation rate from the viewpoint of producing high speed aggregation effect of the water-dispersed resin. Since a carboxylic acid group tends to be influenced by a pH change, a dispersion state changes easily and its aggregation property is high. Examples of resins suitable for use in ink compositions according to the present embodiment are: an acrylic resin, a vinyl acetate resin, a styrene butadiene resin, a vinyl chloride resin, an acrylic styrene resin, a butadiene resin and styrene resin. As for the resin component of the water-dispersed resin, it is preferable that it is a polymer having both a hydrophilic portion and a hydrophobic part in the molecule. By having a hydrophobic part, it is possible that a hydrophobic part will be orientated to the inside of the water-dispersed resin, and a hydrophilic portion will be effectively orientated to the outside of the water-dispersed resin. As a result, the change of a dispersion state in response to the pH change of a liquid will become larger, and aggregation of the ink will be performed more efficiently.

Examples of commercially available water-dispersed resin emulsions include: Joncryl 537 and 7640 (styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-633, NeoCryl A-1131, NeoCryl A-2091, NeoCryl A-550,

NeoCryl BT-101, NeoCryl SR-270, NeoCryl XK-52, NeoCryl XK-39, NeoCryl XK-205 NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl BT-36, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95.

As the fluorine-based resin, fluorine-based resin fine particles having a fluoroolefin unit are preferred. Of these, fluorine-containing resin fine particles containing a fluoroolefin unit and a vinylether unit are particularly preferable. The fluoroolefin unit is not particularly limited and may be suitably selected in accordance with the intended use. Examples thereof include $-CF_2CF_2-$, $-CF_2CF(CF_3)-$, and $-CF_2CFCl-$.

The vinylether unit is not particularly limited and may be suitably selected in accordance with the intended use. Examples thereof include $-C(R_a)HC(OR_b)-$; wherein $R_a$ is a hydrogen atom or a methyl group; and wherein $R_b$ may be selected from the group consisting of $-CH_2R_c$, $-C_2H_4R_c$, $-C_3H_6R_c$, $-C_4H_8R_c$ and $-C_5H_{10}R_c$, wherein $R_c$ is selected from the group consisting of a hydrogen atom (-H), an hydroxy group (-OH) or a carboxylic acid group (-COOH)

As the fluorine-containing vinylether-based resin fine particles containing a fluoroolefin unit and a vinylether unit, an alternated copolymer, in which the fluoroolefin unit and the vinylether unit are alternately copolymerized, is preferable. As such a fluorine-based resin fine particles, a suitably synthesized compound may be used and a commercially available product may be used. Examples of the commercially available products include FLUONATE FEM-500 and FEM-600, DICGUARD F-52S, F-90, F-90M, F-90N and AQUAFURFURAN TE-5A produced by Dainippon Ink Chemical Industries Co., Ltd.; LUMIFLON FE4300, FE4500, FE4400, ASAHI GUARD AG-7105, AG-950, AG-7600, AG-7000, and AG- 1100 produced by Asahi Glass Co., Ltd.

The water-dispersed resin may be used in the form of a homopolymer, a copolymer or a composite resin, and all of water-dispersed resins having a monophase structure or core-shell structure and those prepared by power-feed emulsion polymerization may be used.

As the water-dispersed resin, it is possible to use a resin which in itself has a hydrophilic group and hence has a certain degree of self-dispersibility, and a resin which in itself has no dispersibility but to which the dispersibility is imparted with use of a surfactant and/or another resin having a hydrophilic group. Among these resins, an emulsion of a resin obtained by emulsion polymerization or suspension polymerization of an ionomer of a polyester resin or a polyurethane resin is most suitably used. In the case of emulsion polymerization of an unsaturated monomer, a resin dispersion is obtained by initiating a polymerization reaction in the dispersed monomer phase in the monomer in water emulsion. A polymerization initiator, a surfactant, a chain transfer agent, a chelating agent and a pH adjustor may be added to the monomer in water emulsion. Thus, a water-dispersed resin can be easily obtained, and the desired properties are easily obtained because the resin components can be varied.

The content of the water-dispersed resin added in the ink of the present invention is preferably from 1 - 40 weight% based on the total weight of the ink, and it is more preferably from 1.5 - 30 weight%, and it is still more preferably from 2 - 25 weight%. Even more preferably, the amount of the water-dispersed resin contained in the inkjet ink, as a solid content, is 2.5 weight% to 15 weight%, and more preferably 3 weight% to 7 weight%, relative to the total ink composition.

Inks may comprise additives such as cosolvents and surfactants which may be similar to the cosolvents and surfactants used in reaction liquids according to the present invention as described above.

An ink set according to the present invention comprises a reaction liquid according to the present invention and an ink composition as described above.

## Printing method

A reaction liquid according to the present invention can be applied to a recording substrate by means of any application method, in particular ink jet printing. A printing method is for example disclosed in published International Patent Application WO2013/131924.

EXAMPLES

## Materials

All chemicals used in the examples were obtained from Sigma Aldrich, unless stated otherwise. All chemicals were used as received, unless stated otherwise.

**Methods**

HSE

HSE data of used components, in particular metal salts are obtained from the Material Safety Data Sheet (MSDS) of the supplier.

Corrosion

Corrosion data of used components, in particular metal salts are obtained from : Corrosion Handbook (Wiley). Furthermore corrosion tests as prescribed by the print head supplier have been performed (soaking certain parts of the print head in the liquid to be jetted for a specified amount of time under specified conditions (specified by the supplier).

Solubility

Solubility data of used components, in particular metal salts are obtained from : data of the supplier and/or, handbook of chemistry and physics and/or Wikipedia (http://en.wikipedia.org/wiki/Solubility).and Mishelevich.A; J.Chem. Thermodynamics 40 (2008); 897-900 for the solubility of Magnesium glutamate

If solubility data were not available, the solubility was determined by adding the respective salt to UHQ water under stirring in steps (e.g. 5 grams at a time, which steps may be smaller at higher concentrations) to a known amount of water. Such a test was performed at ambient conditions. The amount of salt at which the 'solution' became cloudy (visual inspection) was considered to the solubility limit.

Jettability

The jettability of the primer compositions is among others determined by the rheological behavior of the reaction liquids, in particular their viscosities. The viscosity of a reaction liquid is determined using a Haake Rheometer, type Haake Rheostress RS 600, with a flat plate geometry at a temperature of 32°C unless otherwise indicated. The viscosity is measured at shear rates ($\dot{\gamma}$) in the range of between 10 $s^{-1}$ and 1000 $s^{-1}$, unless otherwise indicated.

Jet stability is also monitored in time by a vision method with which jet angles are determined. The test procedure for jet stability is as follows:

1) leaving a print head containing reaction liquid uncapped for 2 days, perform a purge-wipe maintenance procedure and start jetting;
2) leaving a print head containing reaction liquid uncapped for 10 min and start jetting. The jet stability is judged to be OK when procedure 1) can be successfully performed, no nozzle clogging is observed in after procedure 2 and when stable drop forming exists and remains (no satellite and no mist formation).

**Comparative Example A: preparation of a reaction liquid**

14.8 grams of glycerin, 14.8 grams of propylene glycol, 0.06 grams of Vantex®-T (obtained from Taminco), 24.7 grams of Magnesiumcloride hexahydrate and a balance amount of UHQ water were mixed. 100 grams of reaction liquid was obtained, the composition of which is shown in Table 1.

**Comparative Example B: preparation of a reaction liquid**

Comparative Example A was repeated without Vantex®-T and by replacing Magnesiumchloride with Magnesiumnitrate. The amounts of the components were adjusted such that the composition as shown in Table 1 was obtained.

**Comparative Example C: preparation of a reaction liquid**

Comparative Example B was repeated and Magnesiumnitrate was replaced by Magnesiumacetate tetrahydrate. The amounts of the components were adjusted such that the composition as shown in Table 1 was obtained.

**Example 1: preparation of a reaction liquid according to the present invention**

Comparative Example A was repeated without Vantex®-T and without propyleneglycol and by replacing Magnesiumchloride by Magnesiumpidolate. The amounts of the components were adjusted such that the composition as

shown in Table 1 was obtained.

**Example 2: preparation of a reaction liquid according to the present invention**

Example 1 was repeated, Vantex®-T was added. The obtained composition is shown in Table 1.

**Example 3: preparation of a reaction liquid according to the present invention**

Example 2 was repeated, the amount of Vantex®-T was increased, the concentration of Magnesium pidolate was increased, and the amount of glycerin (cosolvent) was reduced. The obtained composition is shown in Table 1.

*Table 1: compositions of reaction liquids according to Comparative Examples A, B and C and Examples 1-4*

| | | amount (wt%) | | | | | |
|---|---|---|---|---|---|---|---|
| (Comparative) Example | | A | B | C | 1 | 2 | 3 |
| cosolvent | Glycerin | 14.8 | 16.7 | 14.6 | 21.2 | 21.2 | 8 |
| | propyleneglycol | 14.8 | 16.6 | 14.4 | - | - | - |
| pH-agent | Vantex®-T | 0.06 | - | - | - | 0.01 | 0.02 |
| Salt | $MgCl_2 \cdot 6H_2O$ | 24.7 | - | - | - | - | - |
| | $Mg(NO_3)_2 \cdot 6H_2O$ | - | 24.1 | - | - | - | - |
| | Mg-acetate$\cdot 4H_2O$ | - | - | 12.1 | - | - | - |
| | Mg-pidolate | - | - | - | 18.5 | 18.5 | 24.9 |
| | water | to 100 wt% | | | | | |

*Table 2: evaluation of reaction liquids shown in Table 1.*

| Exp. | HSE-friendly | corrosive | odor | solubility of anhydrous salt (g/100 ml) | viscosity [mPas] | Jet Stability |
|---|---|---|---|---|---|---|
| A | yes | yes | no | 54.3 | 6.7 | OK |
| B | no | no | no | 125 | 5.8 | OK |
| C | yes | no | yes, strong acetate smell (vinegar) | 53.4 | 5.4 | OK |
| 1 | yes | no | no | 131[2)] | 6.1 | OK |
| 2 | yes | no | no | 131[2)] | 6.1 | OK |
| 3 | yes | no | no | 131[2)] | 5.2 | OK |
| 2) determined according to the above described method. | | | | | | |

Table 2 shows that reaction liquids according to the present invention comprise polyvalent metal salts having relatively high solubilities in water, e.g. 131 g/100 ml for Mg-pidolate. This means that high cation concentrations can be obtained, such that the reaction liquids can be applied in relatively thin layers, in order to obtain an effective cation loading of the recording substrate without adding a large amount of liquid, which may cause deformation of the recording substrate. It can further be concluded from Table 2 that the salts used in reaction liquids according to the present invention are HSE-friendly (in fact Mg-pidolate is also known as food supplements), non-corrosive and odorless.

## Claims

1. Ink set comprising an aqueous reaction liquid comprising a salt of the conjugate base of pidolic acid wherein the salt comprises a polyvalent metal ion selected from the group consisting of : $Ca^{2+}$, $Mg^{2+}$, $Sr^{2+}$, $Zn^{2+}$, $Cu^{2+}$, $Ni^{2+}$, $Fe^{3+}$, $Cr^{3+}$ and $Al^{3+}$ as a cation, the ink set comprising an ink composition comprising dispersed particles that upon

contact with the salt comprised in the reaction liquid agglomerate.

2. Ink set according to claim 1, wherein the dispersed particles comprised in the ink composition comprise pigment particles.

3. Ink set according to any one of claims 1-2, wherein the dispersed particles comprised in the ink composition comprise latex particles.

4. Method of printing comprising the steps of :

   - providing an ink set according to any one of the claims 1-3; and a print substrate ;
   - applying the reaction liquid comprised in the ink set to a surface of the print substrate ;

applying the ink composition comprised in the ink set to a surface of the print substrate.

5. Method of printing according to claim 4, wherein the reaction liquid is first applied to the surface of the print substrate and subsequently the ink composition is applied to the surface of the print substrate.

6. The method according to any one of claims 4-5, wherein the reaction liquid is applied by ink jet.

7. The method according to any one of claims 4-6, wherein the reaction liquid is applied to the surface of the print substrate in a pattern.

8. The method according to any one of claims 4-7, wherein the reaction liquid is applied to the surface of the print substrate in accordance with an image to be formed by subsequently printing the ink composition.

9. The method according to any one of claims 4-8, wherein the ink composition is imagewise applied by ink jet.

## Patentansprüche

1. Tintensatz mit einer wässrigen Reaktionsflüssigkeit, die ein Salz der konjugierten Base von Pidolsäure enthält, wobei das Salz ein polyvalentes Metallion enthält, das ausgewählt ist aus der Gruppe bestehend aus: $Ca^{2+}$, $Mg^{2+}$, $Sr^{2+}$, $Zn^{2+}$, $Cu^{2+}$, $Ni^{2+}$, $Fe^{3+}$, $Cr^{3+}$, und $Al^{3+}$ als Kation, wobei der Tintensatz eine Tintenzusammensetzung umfasst, die dispergierte Partikel enthält, die bei Kontakt mit dem in der Reaktionsflüssigkeit enthaltenen Salz agglomerieren.

2. Tintensatz nach Anspruch 1, bei dem die dispergierten Partikel, die in der Tintenzusammensetzung enthalten sind, Pigmentpartikel umfassen.

3. Tintensatz nach einem der Ansprüche 1-2, bei dem die dispergierten Partikel, die in der Tintenzusammensetzung enthalten sind, Latexpartikel umfassen.

4. Verfahren zum Drucken, mit den Schritten:

   - bereitstellen eines Tintensatzes nach einem der Ansprüche 1-3; und eines Drucksubstrats;
   - aufbringen der Reaktionsflüssigkeit, die in dem Tintensatz enthalten ist, auf eine Oberfläche des Drucksubstrats;

aufbringen der Tintenzusammensetzung, die in dem Tintensatz enthalten ist, auf eine Oberfläche des Drucksubstrats.

5. Verfahren zum Drucken nach Anspruch 4, bei dem die Reaktionsflüssigkeit zuerst auf die Oberfläche des Drucksubstrats aufgebracht wird und anschließend die Tintenzusammensetzung auf die Oberfläche des Drucksubstrats aufgebracht wird.

6. Das Verfahren nach einem der Ansprüche 4-5, bei dem die Reaktionsflüssigkeit mittels Tintenstrahl aufgebracht wird.

7. Das Verfahren nach einem der Ansprüche 4-6, bei dem die Reaktionsflüssigkeit in einem Muster auf die Oberfläche

des Drucksubstrats aufgebracht wird.

**8.** Das Verfahren nach einem der Ansprüche 4-7, bei dem die Reaktionsflüssigkeit in Übereinstimmung mit einem Bild, das durch anschließendes Drucken der Tintenzusammensetzung zu erzeugen ist, auf die Oberfläche des Drucksubstrats aufgebracht wird.

**9.** Das Verfahren nach einem der Ansprüche 4-8, bei dem die Tintenzusammensetzung bildmäßig mittels Tintenstrahl aufgebracht wird.

**Revendications**

**1.** Ensemble d'encre comprenant un liquide de réaction aqueux comprenant un sel de la base conjuguée de l'acide pidolique dans lequel le sel comprend un ion métallique polyvalent choisi dans le groupe constitué par : $Ca^{2+}$, $Mg^{2+}$, $Sr^{2+}$, $Zn^{2+}$, $Cu^{2+}$, $Ni^{2+}$, $Fe^{3+}$, $Cr^{3+}$ et $Al^{3+}$ sous forme de cation, l'ensemble d'encre comprenant une composition d'encre comprenant des particules dispersées qui, lors du contact avec le sel contenu dans le liquide de réaction, s'agglomèrent.

**2.** Ensemble d'encre selon la revendication 1, dans lequel les particules dispersées contenues dans la composition d'encre comprennent des particules de pigment.

**3.** Ensemble d'encre selon l'une quelconque des revendications 1 et 2, dans lequel les particules dispersées contenues dans la composition d'encre comprennent des particules de latex.

**4.** Procédé d'impression comprenant les étapes consistant à :

- se procurer un ensemble d'encre selon l'une quelconque des revendications 1 à 3 ; et un substrat d'impression ;
- appliquer le liquide de réaction contenu dans l'ensemble d'encre sur une surface du substrat d'impression ;

appliquer la composition d'encre contenue dans l'ensemble d'encre sur une surface du substrat d'impression.

**5.** Procédé d'impression selon la revendication 4, dans lequel le liquide de réaction est d'abord appliqué sur la surface du substrat d'impression et, par la suite, la composition d'encre est appliquée sur la surface du substrat d'impression.

**6.** Procédé selon l'une quelconque des revendications 4 et 5, dans lequel le liquide de réaction est appliqué par jet d'encre.

**7.** Procédé selon l'une quelconque des revendications 4 à 6, dans lequel le liquide de réaction est appliqué sur la surface du substrat d'impression selon un motif.

**8.** Procédé selon l'une quelconque des revendications 4 à 7, dans lequel le liquide de réaction est appliqué sur la surface du substrat d'impression conformément à une image à former par impression ultérieure de la composition d'encre.

**9.** Procédé selon l'une quelconque des revendications 4 à 8, dans lequel la composition d'encre est appliquée sous forme d'image par jet d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6419352 B
- US 6786588 B
- US 8523342 B
- US 5591018 A
- US 20110303113 A
- US 20120098883 A
- US 20120314000 A
- WO 2014051547 A
- US 20120019588 A
- US 20140055520 A
- JP 2014097632 B
- EP 2489707 A1
- EP 0761783 A2
- WO 2011099977 A1
- EP 0959112 A1
- US 2012229558 A1
- WO 2013131924 A


### Non-patent literature cited in the description


- disclose the solubilities of magnesium-L-ascorbate, calcium-L-ascorbate, magnesium-L-glutamate, magnesium-D-gluconate, calcium-D-gluconate, calcium-D-heptagluconate, L-aspartic acid, and 3-nitrobenzoic acid in water. **MISHELEVICH A et al.** Journal of Chemical Thermodynamics. Academic press, 01 May 2008, vol. 40, 897-900
- Corrosion Handbook. Wiley
- handbook of chemistry and physics and/or Wikipedia. J.Chem. Thermodynamics. 2008, vol. 40, 897-900